Europäisches Patentamt

European Patent Office

Office européen des brevets

(11) Publication number:
**0 397 436**
**A2**

# EUROPEAN PATENT APPLICATION

(21) Application number: **90304920.3**

(22) Date of filing: **08.05.90**

(51) Int. Cl.5: **G11B 23/087**

(30) Priority: **09.05.89 JP 53580/89 U**

(43) Date of publication of application:
**14.11.90 Bulletin 90/46**

(84) Designated Contracting States:
**DE FR GB**

(71) Applicant: **KONICA CORPORATION**
**No. 26-2, Nishishinjuku 1-chome Shinjuku-ku**
**Tokyo(JP)**

(72) Inventor: **Yasufuku, Yoshitaka**
**c/o Konica Corporation, 1 Sakura-machi**
**Hino-shi, Tokyo(JP)**
Inventor: **Takahashi, Nobuaki**
**c/o Konica Corporation, 1 Sakura-machi**
**Hino-shi, Tokyo(JP)**

(74) Representative: **Senior, Alan Murray et al**
**J.A. KEMP & CO 14 South Square Gray's Inn**
**London WC1R 5EU(GB)**

(54) **Tape cassette.**

(57) A magnetic tape cassette comprises a pair of height regulating surfaces to the positions where a pair of openings are provided through which the tape is drawn out from one of the reels in the cassette housing through one opening and follows a tape path to be rewound by the take-up reel through the other opening. The invention is characterized in that: inclined surfaces are provided to the inner wall of the housing lower half, wherein the inclined surfaces are connected with the height regulating surfaces and inclined towards the reels so that the tape edge can be protected. The outer wall of the housing lower half is variously patterned in the positions reciprocal to the inclined surfaces in order to prevent the wall from shrinking at the plastic molding process.

FIG. 1

# TAPE CASSETTE

## BACKGROUND OF THE INVENTION

This invention relates generally to magnetic tape cassettes, and particularly to a magnetic tape cassette suitable for use as a video tape cassette.

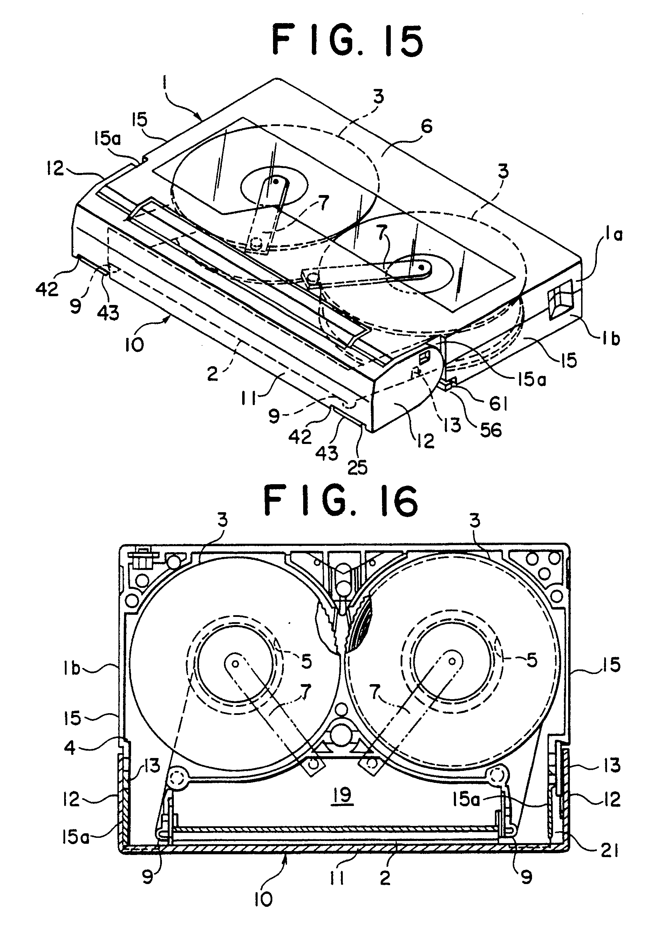

The prior art will be explained as follows. A conventional magnetic cassette for use as a video tape cassette, and particularly for an 8mm video tape cassette, is shown in Fig. 15 to Fig. 20.

The cassette housing 1 of this magnetic tape cassette is composed of the upper half 1a of the cassette housing and the lower half 1b of the cassette housing. The tape reels 3, 3 by which the magnetic tape 2 is wound are provided in the cassette housing; one tape reel is on the left side in the cassette housing and the other tape reel is on the right side in the cassette housing as shown in Fig. 15. The tape reels 3, 3 are placed above the drive shaft holes 5, 5 and the rotation centers of the reels are pressed downward by the leaf springs 7, 7 which are fixed to the inside of the upper wall 6 of the cassette housing 1. The magnetic tape 2 is unwound and delivered from one of the reels 3 and guided by the tape guides 9, 9 which are provided on both the left side and the right side of the front portion in the cassette housing 1 in Fig.15. Then the tape 2 is wound by the other reel 3.

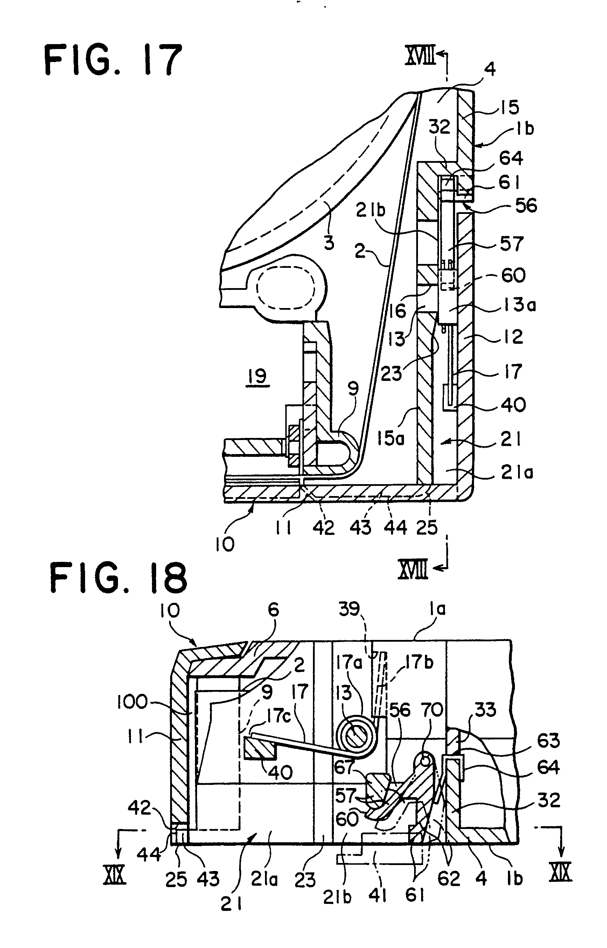

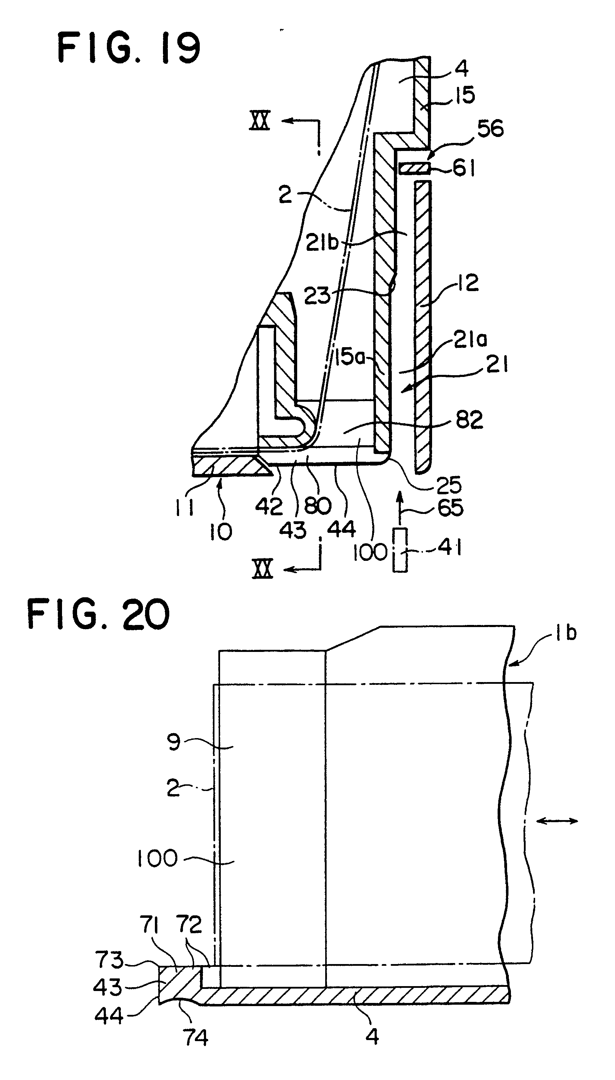

The front lid 10 to protect the magnetic tape 2 is rotatably pivoted to the cassette housing 1 at its front surface side. This front lid 10 has the front surface plate 11 which covers all of the front portion of the cassette housing 1, the connecting members 12, 12 [side walls] which connect the left and right side edges of the front surface plate 11 with the rear portion of the cassette housing 1, and the pivotal clamping members 13, 13 which are protruded from the inside of the connecting members 12, 12, wherein the pivotal clamping members 13, 13 face each other. The pivotal clamping members 13, 13 are supported by the holes 16, 16 which are formed at the front portions 15a, 15a of the left and right side walls 15, 15 of the cassette housing 1. [Refer to Fig. 17.] The front lid 10 is rotatably pivoted to the cassette housing at its front surface side, between the opened position and the closed position. However, the front laid 10 is always closed by the action of the torsion spring 17 which is provided to the pivotal clamping member 13, wherein the front lid 10 is always pushed against the the cassette housing 1 by the lid-urging coil spring 17. When the magnetic tape cassette is not being used, the front lid 10 is closed and locked to protect the outside of the magnetic tape 2 which is at the front portion of the magnetic tape cassette. When the front lid is closed, the gap 21 is formed between one of the side walls 15 of the cassette housing 1 and one of the connecting members 12 which faces the side wall 15. The lock means 56 of the front lid 10 is provided in this gap 21. When the magnetic tape cassette is inserted into a recording and playback equipment, the release member 41 of the recording and playback equipment is moved in the arrowed direction shown in Fig. 19 to the gap 21 from the front portion of the cassette housing 1. As a result, the release member 41 comes into contact with the lock means 56 as shown by a dotted line in Fig. 18, and the front lid which has been locked is released. Consequently, the front lid 10 is opened and a tape loading pin of the recording and playback equipment is put into the pocket 19 formed in the front portion of the cassette housing 1 in order to pull out the magnetic tape 2.

In Fig. 17, the ramp 23 is formed on the outside of the front edge portion 15a of the right side wall 15, and the ramp 23 forms the boundary between the front half portion 21a in which the above-described gap 21 is wide and the rear half portion 21b in which the gap 21 is narrow. To be more concrete, the ramp 23 is placed in front of the above-described hole 16. The front edge of the front edge portion 15a which is placed at the left side of the wide front half 21a of the gap 21 is formed into the inclined guide surface 25, and the gap 21 widens out into a large space. The protruded base portion 13a of the pivotal clamping member 13 which is protruded from the right connecting member 12, comes into contact with the outer surface of the front half portion 15a of the cassette housing 1. In this way, the width of the narrow rear half portion 21b is kept constant.

The rotatable lock member 56 which composes a lock means of the closed front lid 10, is provided in the narrow rear half portion 21b in the gap 21.

Referring to Fig. 17 and Fig. 18, the lock member 56 is composed of; the arm 57 which is supported by the fulcrum shaft 70; the engagement claw 60 which is provided to the tip of the arm 57; the arm 62 which is connected with the arm 57; and the compressed unit [the lock release unit] 61. At the furthest position of the gap 21, the wall member 32 of the lower cassette housing 1b and the wall member 33 of the upper cassette housing 1a are joined through the leaf-spring-through-hole 63. The leaf spring 64 is set through the leaf-spring-through-hole 63 and the lock means 56 is forced to rotate clockwise toward the lock position by the resilient force of the leaf spring 64. The lock means 56 is assembled into the lower cassette housing 1b before the upper cassette housing 1a is set on the lower cassette housing 1b. The middle coil portion 17a of the lid-urging coil spring 17 is set to the pivotal clamping member 13 and one end 17b of the lid-urging coil spring 17 is supported by the longitudinal groove 39 which is provided to the outer surface of the front edge portion 15a of the right side wall 15 of the cassette housing. The other end 17C of the lid-urging coil spring 17 is supported by the spring support 40 which is provided to the inside of the right connecting member 12 of the front lid 10.

When the magnetic tape cassette is not being used, the front lid 10 is securely locked in such a way that the engagement claw 60 of the lock means 56 always engages with the engaging portion 67 of the front lid 10 so that the front lid 10 can not be rotated around the pivotal clamping member 13. When the magnetic cassette with its front lid closed is inserted into the recording and playback equipment, the lock release member 41 provided to the recording and playback equipment is guided from the front to the cassette housing and enters the gap 21 through the front opening 42 of the front lid 10. Therefore, the lock release member 41 pushes the compressed unit 61 of the lock means 56 forward. As a result, as shown by a dotted line in Fig. 18, the lock means 56 is rotated counterclockwise pushing the leaf spring 64, and the engagement claw 60 is released from the engagement unit 67 of the front lid 10 so that the front lid 10 is unlocked.

In this case, as shown in Fig. 15 and Fig. 18, the openings 42, 42 are formed by cutting out the front plate 11 of the front lid 10 at the right side and the left side, i.e., at the lower portion of the place where magnetic tape 2 is pulled out from the cassette housing. The protruded members 43, 43 which are protruded from the front edge of the cassette housing bottom plate 4, are set in the openings 42, 42. Each protruded member 43 is set at the position where the tip 44 of the protruded member 43 is placed in the center of the width of the front plate 11 as shown in the drawing.

The structure of the magnetic tape cassette is explained as follows. The lock member 56 and the gap 21 into which the release member 41 is inserted, are provided to the cassette housing. Since the inclined guide surface 25 and the ramp 23 are provided to the cassette, the release member 41 is properly guided into the gap 21 and the pushed portion 61 of the lock member 56 is properly pushed by the release member 41 even if the tape cassette is improperly set with regard to the recording and playback equipment.

As clearly shown in Fig. 20, the tape height regulating rib 71 is integrally protruded from the lower half bottom plate 4 between the tape guide [the pole] 9 which is integrally molded on the front side of the lower half case 1b and the side wall 15a of the case which faces the tape guide 9 where the opening 100 is located through which the tape goes out and comes in. [Refer to Japanese Patent Publication Open to Public Inspection No. 258783/1985.] Accordingly, the vertical movement of the tape 2, which is illustrated by a chain line, is regulated by the upper surface of the rib 71.

However, the rib 71 has the right-angled edges 72 and 73 along the side line of the cassette. Accordingly, the lower edge of the tape 2 tends to be damaged by these right-angled edges, and the damage of the tape causes deterioration of the electromagnetic conversion characteristics. The tape damage also causes a problem while the tape is running. As the portion to which the rib 71 is provided is thicker than the other portions of the cassette, the concave portion 74 shown in the drawings, which is called the shrink, is formed when the cassette is molded, wherein the shrink occurs on the rear side of the cassette [the lower side of the lower cassette]. Consequently, the quality of the cassette is degraded.

## SUMMARY OF THE INVENTION

The object of the present invention is to provide a tape cassette characterized in that: the tape running efficiency can be improved without damaging the tape edge; the quality of the tape is high; and it is easy to keep the tape cassette.

According to this invention there is provided a magnetic tape cassette for recording or playback equipment including a housing, supply and take-up reels for the tape within the housing, openings through which in use the tape passes out of and returns into the housing, height regulating surfaces at said openings to define the position of the tape in its lateral sense in use, a surface on the inside of the bottom wall of the housing which is arranged to guide the tape towards at least one of the height regulating surfaces from the adjacent reel, and recesses on the outside of the said wall of the housing in the area of the said surface.

The invention will be better understood from the following description which is given by way of example only with reference to the accompanying drawings in which:

## BRIEF DESCRIPTION OF THE DRAWINGS

Fig. 1 to Fig. 14 illustrate examples of tape cassettes of the present invention.

Fig. 1 is a vertical section of the main portion of the lower half case of the tape cassette for 8mm video tape use. [The vertical section is taken on line I-I of Fig. 3 and Fig. 4.]

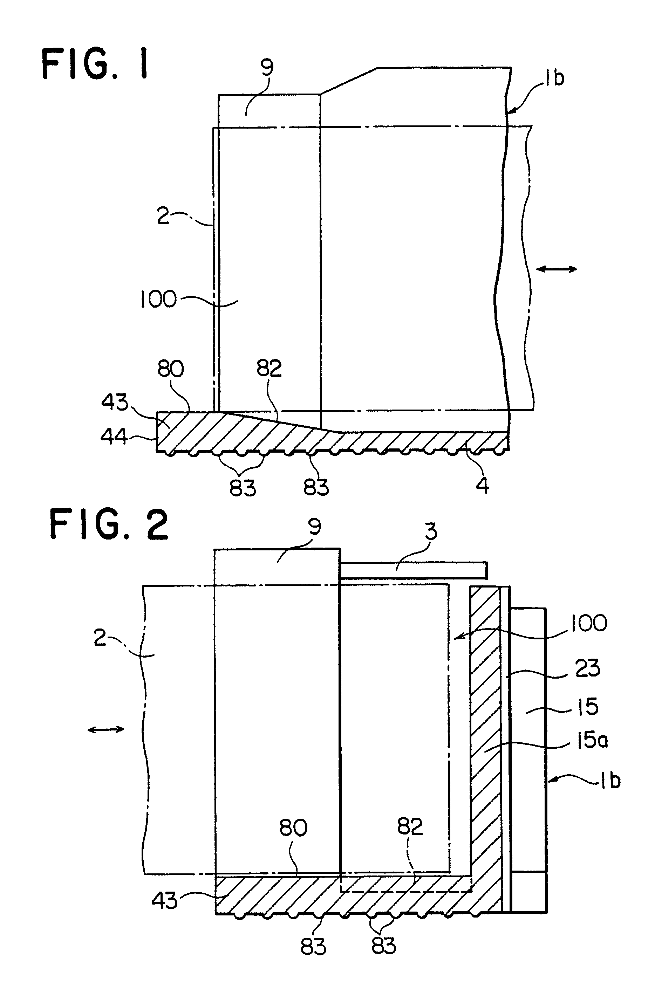

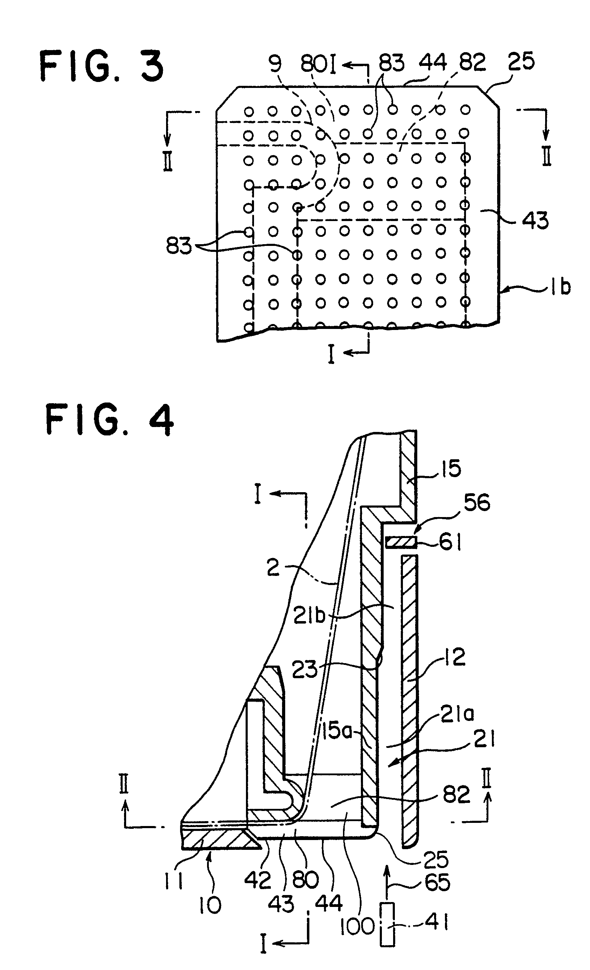

Fig. 2 is a vertical section of another main portion of the lower half case of the tape cassette. [The vertical section is taken on line II-II of Fig. 3 and Fig. 4.]

Fig. 3 is a drawing which illustrates the rear side of the lower half case of the tape cassette shown in Fig. 1.

Fig. 4 is a transverse sectional view of the main portion of the tape cassette.

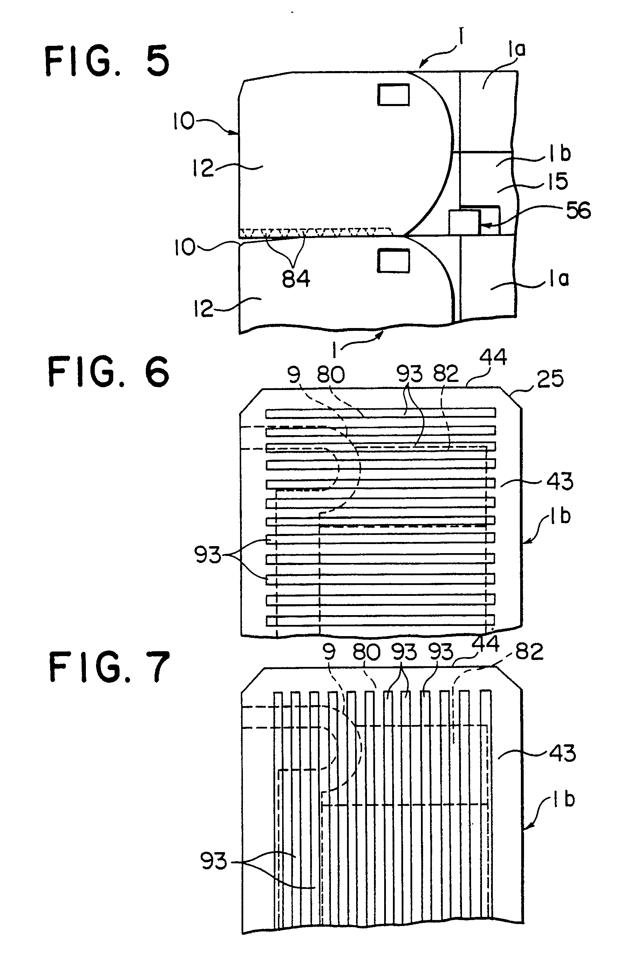

Fig. 5 is a side view of the main portion of a plurality of tape cassettes which are stacked.

Fig. 6 and Fig. 7 are drawings which illustrate the rear side of the main portion of the lower half case of the tape cassette in another example.

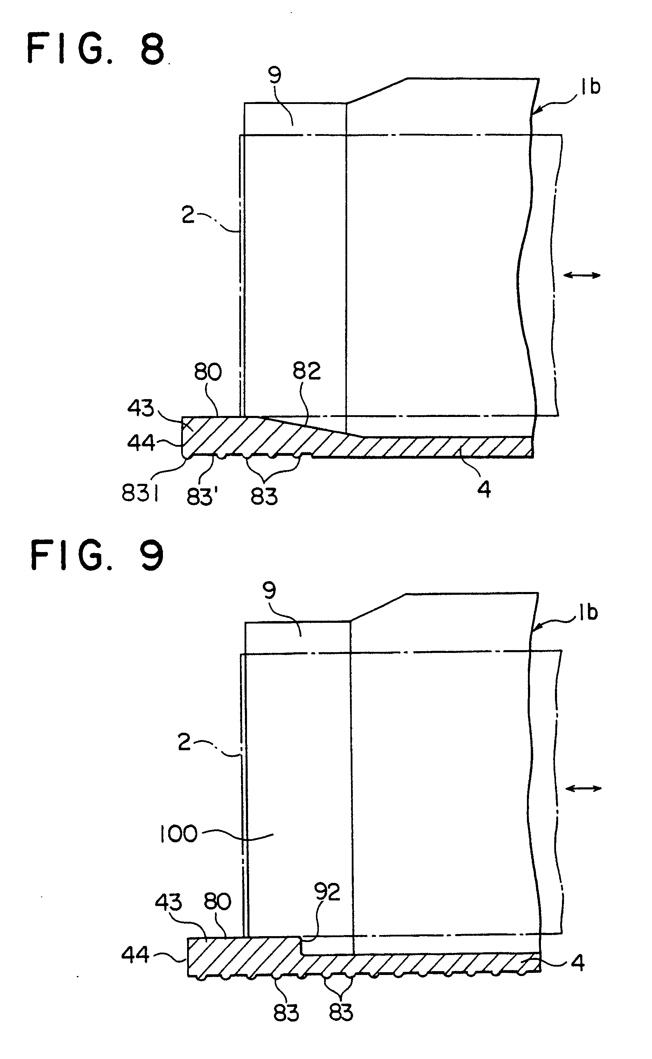

Fig. 8, Fig. 9, Fig. 10, Fig. 11, and Fig. 13 are vertical sections of the main portion of the tape cassette in another example, wherein the vertical sections are taken in the same way as in Fig. 1.

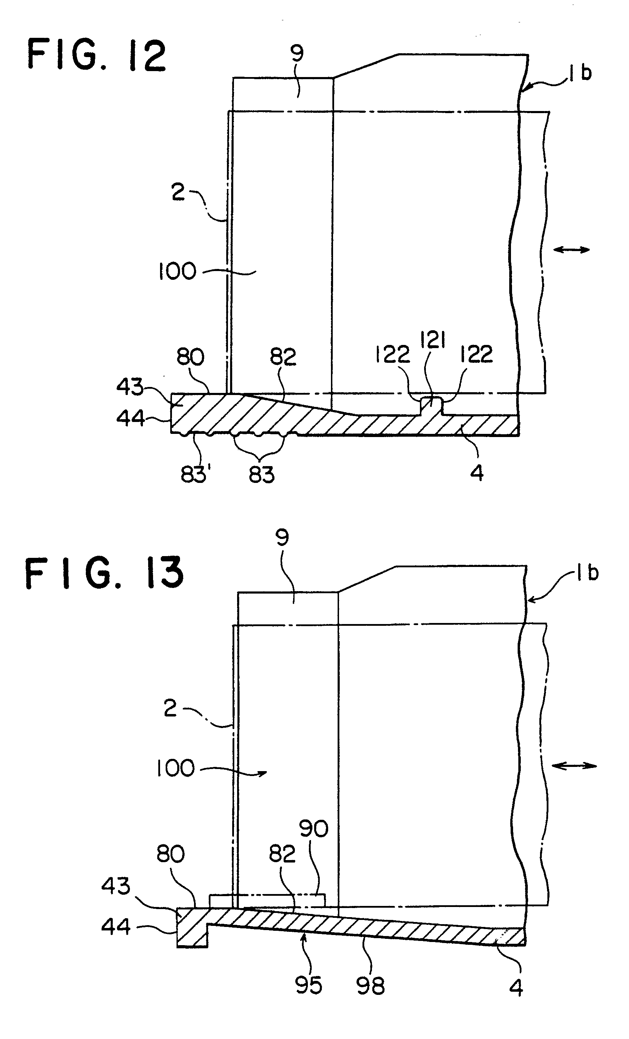

Fig. 13 is a vertical section of the main portion of the tape cassette in another example, wherein the vertical section is taken in the same way as in Fig. 1.

Fig. 15 to Fig. 20 are drawings which illustrate the conventional tape cassette.

Fig. 15 is a perspective view of a tape cassette for 8mm video tape use.

Fig. 16 is a transverse sectional view of the tape cassette.

Fig. 17 is a transverse sectional view of the main portion of the tape cassette.

Fig. 18 is a sectional view taken on line XVII-XVII of Fig. 17.

Fig. 19 is a sectional view taken on line XVIII-XVIII of Fig. 18.

Fig. 20 is a sectional view taken on line XX-XX of Fig. 19.

## DETAILED DESCRIPTION OF THE INVENTION

In the present invention, an inclined surface is provided to the tape height regulating surface or the corner which is formed by the tape height regulating surface, is chamfered. Accordingly, the tape can enter smoothly onto the above-described surface without the lower edge being damaged. As a result, the tape can be run without being damaged and the electromagnetic conversion characteristics can be improved.

Since protruded portions and/or cut-out portions are provided to the rear side of the tape height regulating surface and the above-described inclined surface, the shrink which tends to occur during molding can be effectively prevented, and even if the shrink occurs, it is not so remarkable that the appearance of the rear side of the tape cassette is good and its quality [value] can be enhanced.

Furthermore, the above-described protruded portions and/or cut-out portions are provided to the rear side of the tape cassette. Accordingly, when a plurality of tape cassette are stacked, the contact surface between the upper cassette and the lower cassette is made rough. As a result, the upper cassette can be effectively prevented from slipping from the lower cassette. Consequently, it becomes easy to store the tape cassettes.

Embodiments of the present invention will be explained as follows.

Fig. 1 to Fig. 5 illustrate the first embodiment in which the present invention is applied to an 8mm-video cassette. The explanations of parts which are common between this example and the conventional example illustrated in Fig. 15 to Fig. 20 will be omitted. [When another example is explained, the explanations of parts which are common between the two, will be also omitted.]

This example is quite different from the conventional example described before. The inclined surface 82 is provided to the surface 80 to regulate the height of a running tape along the outer surface of the tape guide, wherein the surface 80 is formed in the lower half of the tape cassette. The rear side surface of the the surface 80 and the inclined surface 82 [in this example, the rear side surface of the most portion of the protrusion 43] is provided with a plurality of small protrusions 83.

Since the tape cassette of the example has the structure described above, the tape 2 can smoothly enter onto the surface 80 being guided by the inclined surface 82 when the tape 2 is run between the reel 3 and the magnetic recording equipment. Therefore, the lower edge of the tape 2 is not damaged and the tape can be run or put back to the cassette without being damaged and the folded edge can be eliminated. Consequently, the electromagnetic conversion characteristics can be improved. As illustrated in the drawing, the ramp 82 is formed by a gentle linear slope and it is smoothly connected with the surface 80. Accordingly, the tape 2 can enter into the tape guide portion very smoothly.

Since the inclined surface 82 is provided to the tape cassette, the thickness of the protrusion 43 can be made thicker than the conventional one. When the thickness of the protrusion 43 is increased, the shrink illustrated in Fig. 20 tends to occur. However, the shrink can be effectively prevented by the above-described small protrusions 83 or even if the shrink occurs on the protrusion 43, it is not so remarkable that the appearance is not affected. Consequently, the appearance of the rear side surface of the tape cassette is good and the quality [the value] of the tape cassette can be enhanced. As illustrated in Fig. 3, the number of the small protrusions 83 is large and they are dotted. The width of the region in which the small protrusions 83 are dotted, is preferably the same as the width of the protrusion 43 and its length is preferably 5 to 10mm.

Another effect obtained by providing the small protrusions 83 to the rear surface of the tape cassette, will be explained as follows. When a plurality of tape cassettes 1 are stacked in order to store them as illustrated in Fig. 5, by flattening the top of the protrusion 83 in the same way as the protrusion 84, the small protrusions 84 exist on the surface where the lower half case 1b of the upper tape cassette comes into contact with the upper half case 1a of the lower tape cassette. Accordingly, the upper tape cassette can be effectively prevented from slipping off from the lower tape cassette.

Various shapes and patterns can be applied to the small protrusions 83 described above. Fig. 6 illustrates a stripe pattern in which the protrusions 93 are formed in the direction of the width of the protrusion 43. Fig. 7 illustrates a stripe pattern in which the protrusions 93 are formed in the direction which meets at right angles with the direction of the width of the protrusion 43. The above-described stripe patterns are effective to obtain the effect of the protrusions explained before, and furthermore the appearance of the tape cassette becomes good.

Fig. 8 illustrates the protrusion 83 formed only in the area of the height regulating surface and the inclined surface. In this case, the protrusions are effective to prevent the cassette from slipping off in the same way as the example described above. The protrusion 831 is preferably provided to the lower corner 44 as illustrated in Fig. 8 and the protrusion is preferably chamfered so that the cassette can be smoothly inserted into the playback equipment [the deck].

Fig. 9 to Fig. 14 illustrate further examples of the present invention.

In the example illustrated in Fig. 9, such an inclined surface as shown in Fig. 1 and Fig. 2 is not provided. Instead of the inclined surface 82 illustrated in Fig. 1 and Fig. 2, the chamfered corner 92 is provided to the corner of the tape height regulating surface 80 as shown in Fig. 9. The tape 2 can smoothly enter onto the tape height regulating surface 80 being guided by the chamfered corner 92 in the same manner as being guided by the inclined surface 82, and the tape damage can be prevented. In this example, as small protrusions 83 are provided to the rear surface of the tape cassette, the shrink in the tape height regulating surface region can be prevented when the tape cassette is molded. The corner 92 may be chamfered when the tape cassette is molded or when the tape cassette is machined after molding.

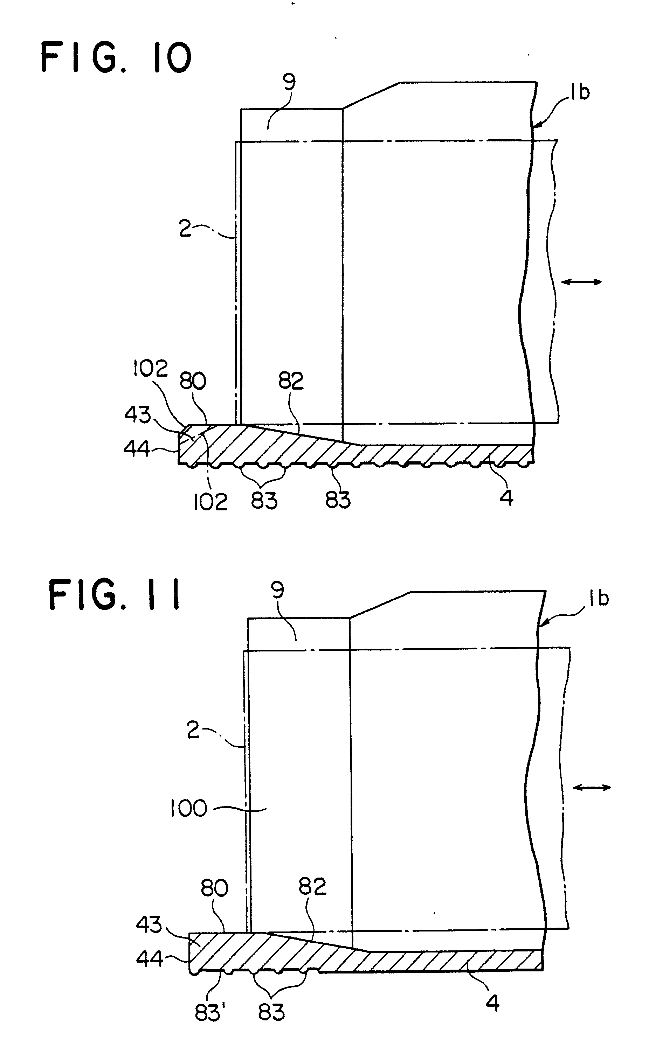

In the example illustrated in Fig. 10, the chamfered corner 102 is provided to the tape height regulating surface 80 shown in Fig. 1. Since both the inclined surface 82 and the chamfered corner 102 are provided to the tape height regulating surface 80 at both sides, the lower edge of the tape 2 is not damaged even when the tape enters onto the tape height regulating surface 80 from either direction, which can be said very advantageous. The shape of the chamfered corner 102 may be either a flat surface illustrated in Fig. 10 or a round surface such as corner 92 has in Fig. 9. The chamfered corner 102 may be replaced with the inclined surface 102 of a relatively gentle slope which is illustrated by a chain line in Fig. 10.

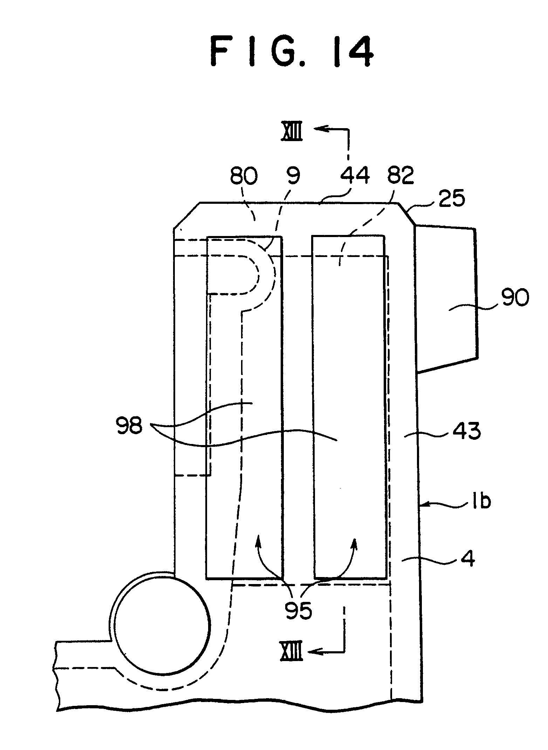

Fig. 13 and Fig. 14 illustrate other examples. As compared with the examples described above, the inclined surface 82 provided next to the height regulating surface 80 is extended towards the back of the cassette. Accordingly the slope of the height regulating surface becomes more gentle. Two grooves 95 are formed on the reverse side of the cassette housing wall in the region reciprocal to the height regulating surface 80 and the inclined surface 82, wherein the grooves 95 are provided with the inclined bottom surfaces 98. The numeral 90 illustrated by a dotted line in Fig. 13, is a protrusion to prevent the dust from entering from the lower part of the cassette, wherein the protrusion 90 is provided to the cassette lower half and extended to the vicinity of the side wall 12 of the lid [Refer to Fig. 17.].

Examples of the present invention have been explained above. The above-described examples can be varied according to the technological concept of the present invention.

For instance, in Fig. 1, the inclined surface 82 may be provided only on the side opposite from the inclined surface 82 illustrated in Fig. 1. The shape of the inclined surface 82 can be either flat or concave. As mentioned above, the position and shape of the inclined surface 82 can be varied. The above-described inclined surface can be variously combined with the chamfered corner. The shape of the chamfered corner may be varied. The chamfered corner may be provided to either one corner of the tape height regulating surface 80 or both corners.

The shape, pattern, number and distribution of the small protruded portions 83, 93 are not restricted to them explained in the above-described examples. The cut-out portions can be used instead of the protruded portions and the protruded portions can be combined with the cut-out portions. In the cases described above, the effect to prevent the tape cassettes from shrinking in the molding process and from slipping off when they are stacked for storage, can be expected. The position to which the protruded portions are provided, may be varied. They may be provided to the position described in the above-mentioned example. They may also be provided to another position, for example, to only the rear surface of the tape height regulating surface or of the inclined surface. For example, as shown in Fig. 12, the protruded portions 83 or the cut-out portions 83' may be provided only to a part of the rear surface of the tape height regulating surface 80. Whena rib 121 is provided to the inside of the lower half case of the tape cassette as illustrated in Fig. 12, wherein the rib 121 is located vertically to the surface of the drawing, it can be expected that the stability of tape running is improved. It is preferable that the corners 122 of the rib 121 are chamfered so that the tape edge can be protected. The design of each portion of the tape cassette can be variously devised. It can be understood that the present invention can be applied to a different type of tape cassette from the above-described cassette.

## Claims

1. A magnetic tape cassette for recording or playback equipment including a housing, supply and take-up reels for the tape within the housing, openings through which in use the tape passes out of and returns into the housing, height regulating surfaces at said openings to define the position of the tape in its lateral sense in use, a surface on the inside of the bottom wall of the housing which is arranged to guide the tape towards at least one of the height regulating surfaces from the adjacent reel, and recesses on the outside of the said wall of the housing in the area of the said surface.

2. A cassette according to claim 1 wherein the said surface is an inclined surface.

3. A cassette according to claim 1 wherein the said surface is a chamfered surface.

4. A cassette according to claim 1, 2 or 3 including a chamfered surface at the exterior edge of the height regulating surface.

5. A cassette according to claim 1, 2 or 3 including an inclined surface at the exterior edge of the height regulating surface.

6. A cassette according to any preceding claim including a projection on the interior of the said bottom wall spaced inwards of the said surface.

7. A cassette according to any preceding claim wherein the recesses take the form of a plurality of projections and recesses between them on the outside of the bottom wall in the region of the said surface.

8. A cassette according to claim 7 wherein the projections and recesses between them cover the outside of the bottom wall.

9. A cassette according to claim 7 wherein the recesses are in a region of a width 5-10 mm extending along the longer dimension of the cassette.

10. A cassette according to any one of claims 1 to 6 wherein the recesses take the form of grooves in the outside of the bottom wall.

# FIG. 1

# FIG. 2

FIG. 3

FIG. 4

FIG. 5

FIG. 6

FIG. 7

FIG. 8

FIG. 9

# FIG. 10

# FIG. II

FIG. 12

FIG. 13

# F I G. 14

# F I G. 15

# F I G. 16

EP 0 397 436 A2

# FIG. 17

# FIG. 18

# FIG. 19

# FIG. 20